# EUROPEAN PATENT SPECIFICATION

(11) **EP 2 219 932 B1**
(45) Date of publication and mention of the grant of the patent: **15.06.2011**
(21) Application number: 08849612.0
(22) Date of filing: 17.11.2008
(51) Int. Cl.: B62B 7/06, B62B 7/14, B62B 9/28, B60N 2/28

(54) **STROLLER AND INFANT CARRIER SYSTEM**
KINDERWAGEN UND TRAGESYSTEM FÜR KLEINKINDER
POUSSETTE ET SYSTÈME PORTE-BÉBÉ

(30) Priority: 16.11.2007 US 988635 P
(43) Date of publication of application: 25.08.2010
(73) Proprietor: GRACO CHILDREN'S PRODUCTS INC., Exton, PA 19341 (US)
(72) Inventor: PIKE, Robert, T., Reading PA 19606 (US); BERRIOS, Frank, Morgantown PA 19543 (US)
(74) Representative: Lawrence, John
(86) International application number: PCT/US2008/083799
(87) International publication number: WO 2009/065129

(56) References cited:
- EP-A- 1 591 339
- EP-A- 1 666 331
- DE-U1- 20 311 781
- US-A1- 2006 131 841

## Description

### Related Application Data

This patent is related to and claims priority benefit of U.S. provisional patent application Serial No. 60/988,635, which was entitled "Strollers with Parent/Child Contact Features" and which was filed on November 16, 2007.

### Background of the Invention

### 1. Field of the Disclosure

The present disclosure is generally directed to stroller systems, and more particularly to a stroller system with an infant carrier mounted to the stroller in part on a seat back portion of the toddler seat of the stroller.

### 2. Description of Related Art

Most existing stroller models have a toddler seat provided as part of the stroller. A number of existing strollers are also configured to mount an infant car seat or infant carrier on the stroller over the toddler seat. Such strollers can thus be configured to transport a newborn or an infant child, prior to the child growing to a size for which the stroller's toddler seat is suited. A typical stroller assembly is configured in such a way that the infant carrier can be mounted closely spaced above the toddler seat, which results in a relatively low seat elevation. To mount the infant carrier, the toddler seat back is often simply reclined backward to its lowermost position. A portion of the infant carrier is supported directly on the seating surface or front side of the seat back. Other strollers are known where separate adapters or brackets are provided in order to accommodate mounting an infant carrier to the stroller. These strollers, however, also result in the infant carrier being positioned fairly far forward and at a relatively low elevation.

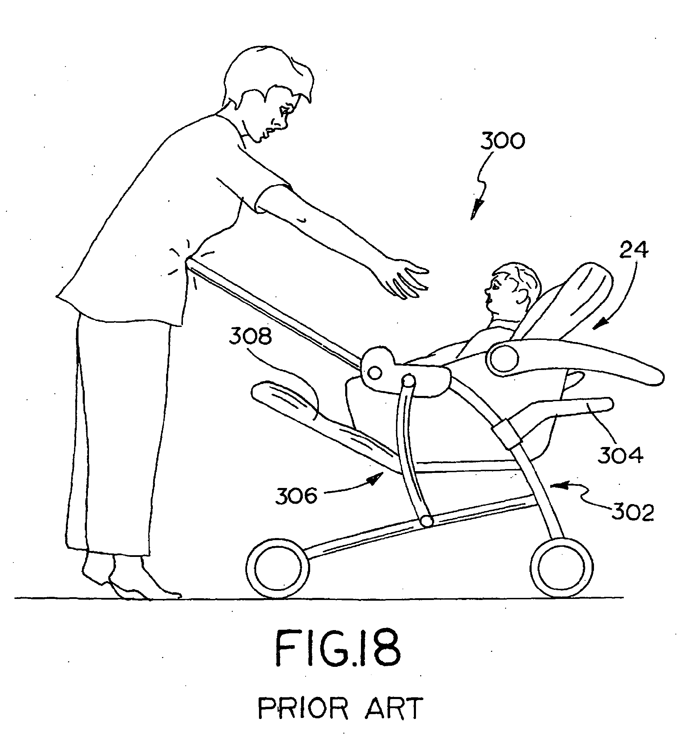

This infant carrier mounting arrangement does not hamper or significantly alter the stability of the stroller during use. However, this mounting arrangement results in a sizeable distance between the parent or caregiver pushing the stroller and the child seated in the infant carrier (see FIG. 18). This relatively large distance and overall cumbersome arrangement makes interaction between the child and parent or caregiver more difficult during use of the stroller. The arrangement can inhibit or even prevent the caregiver from physically touching or making eye contact with the infant seated in the carrier while pushing the stroller or while standing behind the stroller handle.

It is well known that direct eye contact between an infant and caregiver can be calming, comforting, and soothing to the infant. A young infant typically can not see very clearly beyond about 30,48-45,72 cm (12 to 18 inches). Because of the lengthy distance, it can be difficult for an infant to recognize the caregiver while seated in the infant carrier during use of these known strollers. Direct eye contact between caregiver and infant at lengthier distances would not be very beneficial or helpful. It is also well known that direct physical contact between caregiver and infant can often be of significant benefit to the infant or even necessary. For instance, a caregiver's simple touch can be quite calming, comforting, and soothing to the infant. A caregiver may need to readjust the infant's seating position or the position of a seat harness. The caregiver may need to reposition a blanket over the infant or replace to reinsert a fallen pacifier. Any number of circumstances may require frequent direct physical contact between caregiver and infant.

Prior known stroller systems or travel systems significantly hinder the ability of the caregiver to make direct eye contact or to readily reach out and touch the infant. To overcome these difficulties, the caregiver must stop the stroller and walk around to one side of the stroller. For added safety, the caregiver often will also then apply the stroller brake. Once on the side of the stroller next to the infant carrier, the caregiver must also typically bend or lean down in order to comfortably reach the infant or make adequate eye contact.

Others have attempted to solve or improve upon these disadvantages with conventional strollers. One such attempt involved raising the seat position higher on the stroller frame. A Stokke stroller product, known as the Stokke Xplory stroller, provided a height adjustable mounting position for the stroller seat or an infant carrier. However, this stroller employed a completely unique stroller frame design. The Stokke stroller design was based on a frame with a single vertical spar with a seat assembly that slid up or down the spar. The stroller would be quite top heavy and thus unstable with the seat and seat occupant in the raised position. The seat would also not be supported in a particularly stable manner with only one end of the seat mounted only to the vertical spar of the frame. The location of the central frame spar resulted in a seat occupant not being able to place their feet together. Such placement would be hindered by the central location of the spar. Small children are often much more comfortable with their feet together of even crossed. The Stokke Xplory stroller might have permitted some improved interaction between caregiver and child by raising the seat height. However, stability of the seat and frame arrangement is suspect and the comfort of the child seat occupant is negatively affected. In addition, the seat is the only seat on the stroller frame. If the seat is an infant seat, the stroller is not configured to hold a toddler unless the seat is entirely removed and replaced with a different toddler seat.

Other attempts have also been made to address these problems and disadvantages with maintaining the parent and child relationship during use of conventional strollers. For example, several stroller products are known to employ a rotatable or reversible handle, a reversible canopy, a movable canopy flap, or a reversible infant carrier mounting arrangement. These solutions have been devised to help reduce the physical barrier and/or to create closer contact or a more direct visual connection between the caregiver and child. However, these conventional solutions have proved unsatisfactory. The Stokke Xplory stroller discussed above is one rare existing example that attempts to employ alternative solutions to these more common methods. EP 1 591 339 discloses a baby carriage chassis according to the preamble of claim 1, adapted to support a baby's car seat thereon. DE 203 11 781 discloses a pushchair frame according to the preamble of claim 1, that can carry a child's car seat.

The parent child connection is particularly poor when a parent is pushing a conventional stroller. Most strollers require the parent or caregiver to walk behind the child while pushing a stroller. Even on strollers that offer a reversible seat or a reversible handle, it can still be difficult for the caregiver to focus on environmental surroundings and the child at the same time. This is because the infant carrier is positioned quite low as noted above. The low position requires the caregiver to significantly change their direction of focus from the surroundings in order to look at the child. Existing stroller designs simply do not readily permit the caregiver to view the infant carrier and the surroundings while operating the stroller. Traditional stroller designs place the child facing away from the parent and well in front of the parent. These systems also place the infant carrier mounted to the stroller well in front of the caregiver and quite low relative to the caregiver's field of view.

Two other common methods of attempting to improve the parent child relationship in strollers are providing a reversible handle on the stroller and allowing for a rear facing infant carrier orientation. Both of these solutions allow the child to effectively be placed in a rear-facing position relative to the caregiver operating the stroller. However, in the case of the reversible seat, existing designs require the parent to detach the seat from the stroller, lift the seat, and replace it in the opposite facing direction. General safe practice requires first removing the child from the seat before seat reversal can be accomplished. If the child is unable to stand or sit unassisted, this can be considerably inconvenient or worse. A reversible handle is more convenient, since it does not require the parent to remove the child from the stroller. However, reversing the handle on a conventional front-swivel stroller design adversely affects the maneuverability, kick-space, and curb-mounting leverage of the stroller during use with the handle in the reverse orientation. In addition, the typical reversible stroller handle is longer than a conventional handle to accommodate both handle positions. The longer handle would place the caregiver still further from the child during use of the stroller.

### Brief Description of the Drawings

Objects, features, and advantages of the present invention will become apparent upon reading the following description in conjunction with the drawing figures, in which:

FIG. 1 shows a right side view of one example of a stroller system with an infant carrier mounted to the stroller.

FIG. 2 shows a front, top, and right side perspective view of the stroller system in FIG. 1 and with the infant carrier in a ready to install position above the stroller.

FIG. 3 shows a right side view of the stroller in FIG. 2 and with the carrier removed and the toddler seat in a normal use position.

FIG. 4 shows a right side view of the stroller in FIG. 2 and with the seat back of the toddler seat moved to a forward position.

FIG. 5 shows a close up perspective view from the top, front, and left of a carrier mounting bracket on a handle of the stroller in FIG. 2.

FIG. 6 shows a bottom perspective view of the infant carrier of the stroller system in FIGS. 1 and 2.

FIG. 7 shows a representative cross section viewed from the right side and through the center of the seat back of the toddler seat in FIG. 1 and illustrating the carrier latching point on the top edge of the seat back.

FIG. 8 shows a representative cross section viewed from the left side of the mounting bracket in FIG. 5 and with the infant carrier installed as in FIG. 1.

FIGS. 9A and 9B show representative cross sections viewed from the left side of alternate mounting brackets to those in FIGS. 5 and 8 and with an infant carrier installed as in FIG. 1.

FIG. 10 shows a right side view of a stroller system with an infant carrier mounted to the stroller in accordance with the teachings of the present invention.

FIG. 11 shows a partial fragmentary right side view of the stroller in FIG. 10 and with the carrier removed and the toddler seat in a normal use position.

FIG. 12 shows a representative vertical cross section viewed from the right side and through the center of the seat back in FIG. 10.

FIG. 13 shows a partial fragmentary right side view of the stroller in FIG. 10 and with the infant carrier removed and the upper section of the seat back in a forward lowered position.

FIG. 14 shows a top, rear, and left side perspective view of the back side of the upper section on the seat back in FIG. 13.

FIG. 15 shows a representative cross section viewed from the right side of the upper section of the seat back section in FIG. 12 with the infant carrier installed.

FIG. 16 shows a representative cross section viewed from the left side and through the center of the upper section of the seat back in FIG. 10.

FIG. 17 shows a front, top, and right side perspective view of a prior art stroller with an infant carrier in a ready to install position above the stroller seat and tray.

FIG. 18 shows a right side view of a prior art stroller with an infant carrier installed.

### Detailed Description of the Disclosure

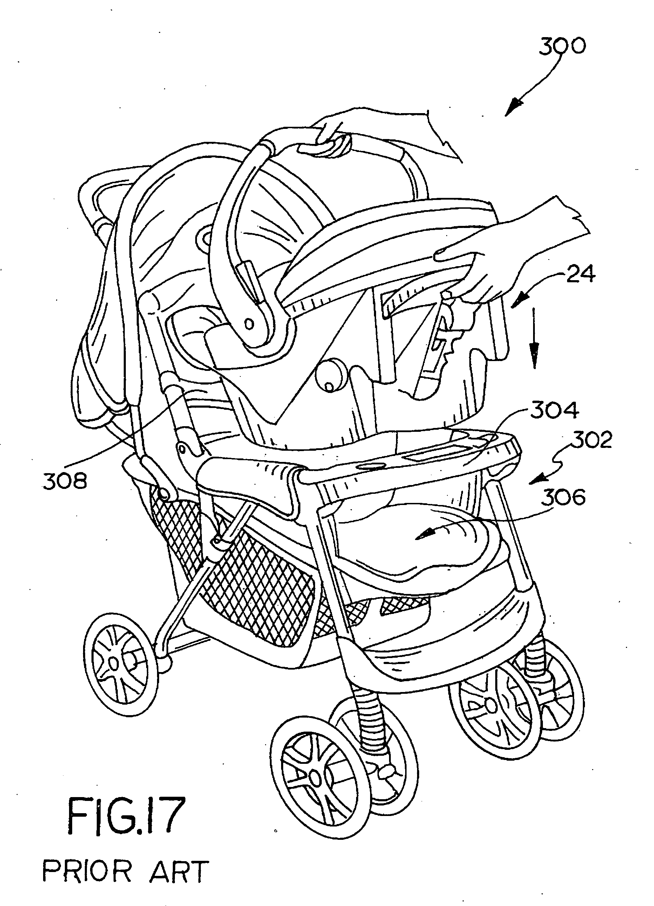

The disclosed stroller systems solve or improve upon one or more of the above-noted and/or other problems and disadvantages with prior art stroller systems. The disclosed stroller systems utilize the seat back of the toddler seat on the stroller assembly to support a portion of an infant carrier that is mounted to the stroller. This allows the infant carrier position or elevation on the stroller to be significantly increased over prior art stroller systems, while not requiring major modification to the stroller frame assembly. In one example, a portion of the infant carrier can be supported on a top edge of the toddler seat back. In another example, a portion of the infant carrier can be supported on a back side of the toddler seat back. In each of the disclosed examples, the seat back can support the infant carrier at an elevation that is closer to a caregiver pushing the stroller in comparison to conventional stroller systems (see FIGS. 17 and 18). In each of the disclosed examples, the infant carrier is also supported in part on a portion of the stroller frame assembly, and particularly, the stroller handle assembly. On most strollers, the stroller handle assembly extends upward and rearward from the frame assembly. With the carrier mounted higher up and supported on the handle assembly, the infant carrier is not only elevated, but also is positioned further rearward and closer to the caregiver.

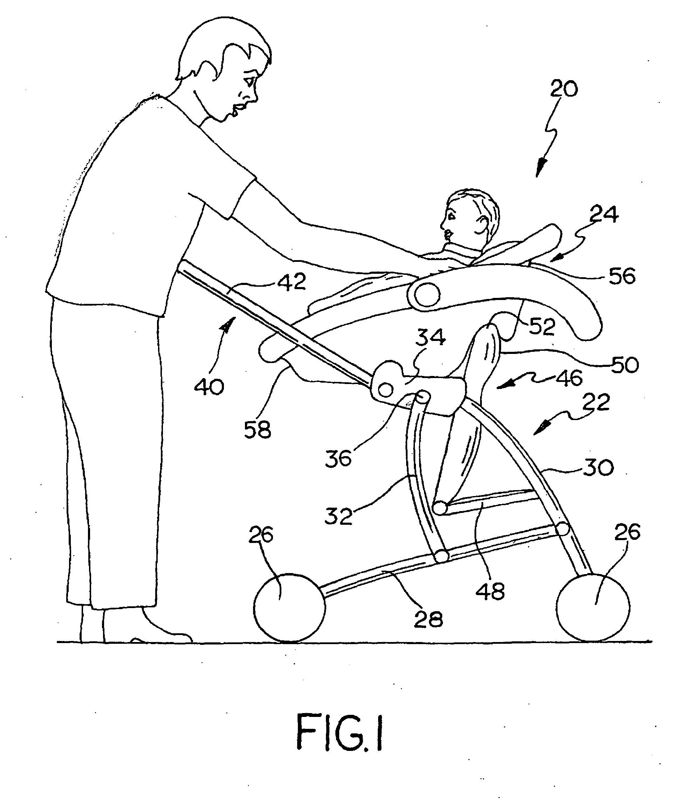

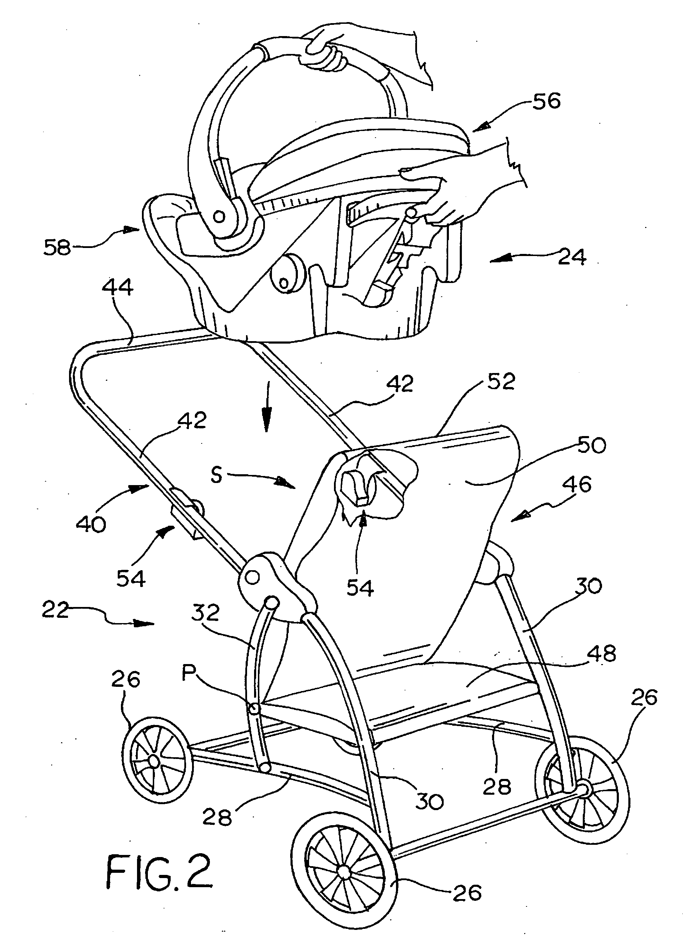

Turning now to the drawings, FIGS. 1 and 2 illustrate a stroller system 20. In this example, the stroller system 20 generally includes a stroller assembly 22 and a removable infant carrier 24 mounted to the stroller assembly. The stroller assembly 22 in this example is illustrated in a generic fashion with a majority of the soft goods and stroller frame features eliminated for ease of description. In general, the stroller assembly 22 is supported on a plurality of wheels 26 as is known in the art. The generic stroller assembly 22 has a frame assembly with two spaced apart frame sides visible in FIG. 2. Each frame side has a bottom rail 28 with a rear end coupled to one of the wheels 26. Each frame side also has a front leg 30 coupled to a forward end of the respective bottom rail 28. Each frame side also has a support strut 32 with a lower end pivotally connected to a respective one of the bottom rails 28 between the front and rear wheels 26. An upper end of each support strut 32 and front leg 30 on each side of the frame assembly is connected to a fold joint 34 in a pivotable manner. In the disclosed example, the bottom rail 28, front leg 30, and support strut 32 on each side of the frame assembly defines a left or right side of the stroller assembly 20.

A handle assembly 40 extends upward and rearward from the fold joint 34 on each side of the frame assembly. The handle assembly 40 in this example has a well known U-shape, as depicted in FIG. 2, with a pair of push bars 42 spaced laterally apart, one on each side of the frame assembly. Each push bar 42 is pivotally coupled at a forward end to the fold joint 34 on its respective frame side. A transverse handle bar 44 extends between the opposite or rearward ends of the push bars 42. As with most conventional strollers, and as generally depicted in FIG. 1, a caregiver is positioned and walks behind the handle bar 44 of the handle assembly 40 while pushing the stroller.

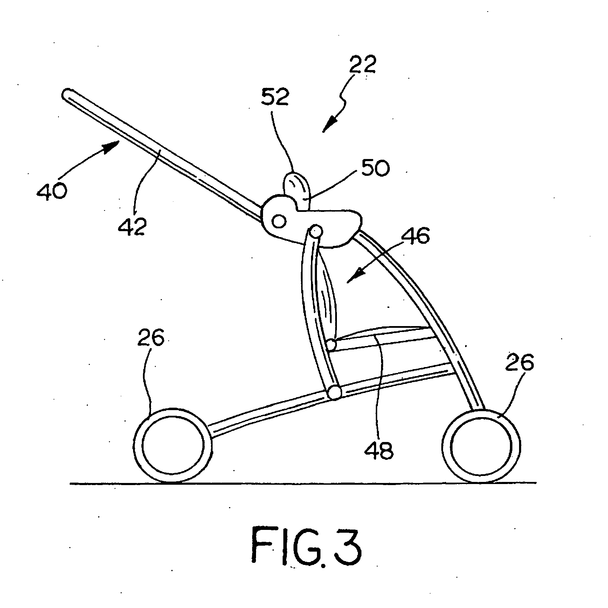

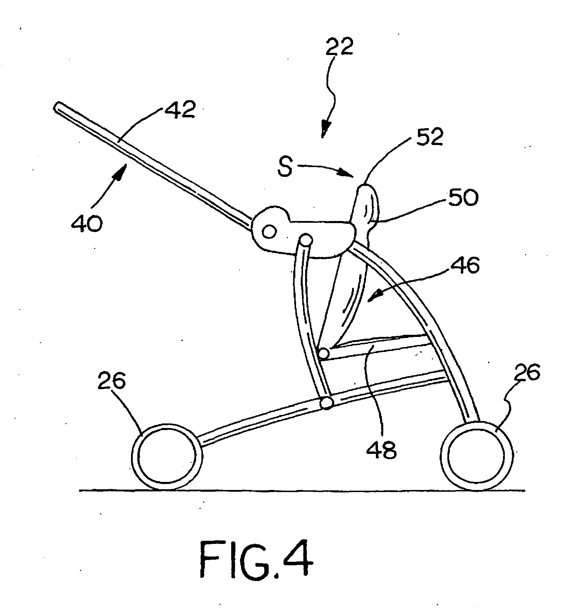

The stroller assembly 22 in the disclosed example also has a toddler seat 46 mounted to the frame assembly between the frame sides. The toddler seat 46 has a seat bottom 48 and a seat back 50 that extends generally upward relative to the seat bottom. In this example, the seat back 50 is pivotable about its bottom end at a seat pivot P located at a rear edge of the seat bottom 48. The seat back 50 in the embodiment of FIG. 1 pivots forward and backward as a unit from a normal use position shown generally in FIG. 3 to a carrier support position shown generally in FIG. 4. In the normal use position of FIG. 3, the toddler seat 46 is configured to seat a child and face the child in the direction of a front of the frame assembly, i.e., in a forward scat facing direction. In the carrier support position of FIG. 4, the seat back 50 is pivoted about the pivot P forward toward the front of the frame assembly from the normal use position in the direction of the arrow S.

As will become evident to those having ordinary skill in the art upon reading this disclosure, the configuration and construction of the stroller assembly 22, including the frame assembly components, can vary from the examples shown and described herein. The various frame assembly components can be altered substantially while still meeting the objectives. In addition, the toddler seat 46, as well as the structures and components that mount the toddler seat to the frame assembly, can also vary within the scope of the present invention. In one example, a travel limiter can be employed as part of the toddler seat 46, the frame assembly, or both in order to hold and retain the seat back 50 in a selected one of the normal use or carrier support positions. The travel limiter elements are not depicted herein, although such elements can certainly be utilized.

The disclosed seat back 50 has a top edge 52 or end that defines the upper terminus of the toddler seat. In one example, the infant carrier 24 is mounted on the stroller assembly 22 and is supported in part on the top edge 52 of the toddler seat 46 as generally depicted in Fig. 1. Supplemental mounting elements, such as mounting brackets 54, can also be employed on a part of the stroller assembly to support the infant carrier 24 when mounted to the stroller assembly. In the disclosed example, the infant carrier 24 generally has a head or rear end 56 and a foot or forward end 58. The infant carrier 24 can be mounted on the stroller assembly 22 in a rear facing orientation with the infant seating area facing the back of the frame assembly or, in other words, toward the handle assembly 40. In this arrangement, the head or rear end 56 of the carrier 24 is supported on the top edge 52 of the seat back 50 and the foot end 58 is supported on the mounting brackets 54.

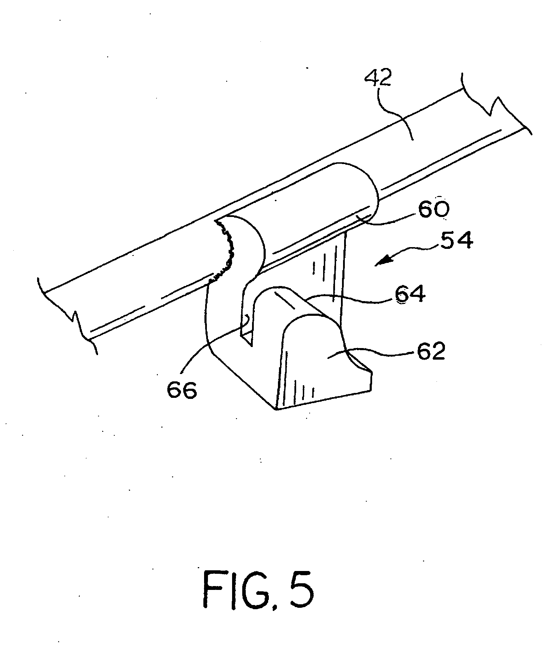

The configuration, structure, and location of the supplemental mounting elements or mounting brackets 54 can vary. In the disclosed example, a mounting bracket 54 is carried on each one of the push bars 42 of the handle assembly 40 as depicted in FIG. 5. The disclosed mounting brackets 54 each have an attachment section 60 configured to attach the bracket to a corresponding push bar 42. The brackets can be welded to the push bars 42 or otherwise suitably fastened. In another example, a parent tray (not shown) can extend between the push bars 42 and one or more supplemental mounting brackets can be carried on the parent tray or can be integrally comprised in the tray itself.

In the disclosed example, each mounting bracket also has a support section 62 positioned on an inner side of the frame assembly and shaped to engage and support a portion of the infant carrier 24. As shown in FIG. 5, the disclosed mounting brackets 54 each have a support surface 64 exposed on top of the support section 62. Each mounting bracket 54 can also have a blind channel 66 and is open from the top and positioned so as to create a space between the attachment section 60 and at the support section 62. The support surfaces 64 and channels 66 can be configured to mate with and support a cooperating mounting element or engagement surface on a side or underside of the infant carrier 24.

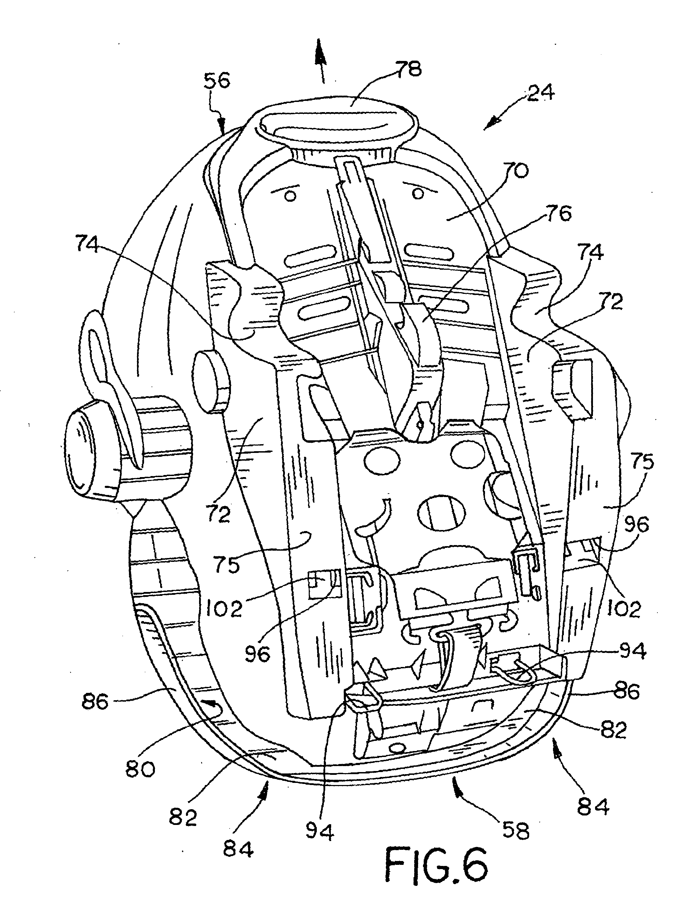

FIG. 6 illustrates one example of a conventional bottom or underside 70 of the infant carrier 24. In this example, a pair of lengthy support standoffs 72 is oriented from front to back on the infant carrier 24 and project downward from the underside 70. The standoffs 72 are laterally spaced apart from one another across the infant carrier 24. An upward recess 74 is formed into a bottom surface 75 of each of the standoffs 72 near the head end 56 of the carrier. A latch hook 76 is disposed between the standoffs near the head end 56 on the carrier. The latch hook 76 projects downward and is open toward the head or rear end 56 on the underside 70 of the carrier. The latch hook 76, as is known in the art, can be spring biased to a latched position and can be moved against the spring biased to a released position by actuating a release handle 78. The release handle 78 in this example is exposed on the head or rear end 56 of the infant carrier 24 and can be pulled rearward to move the latch hook 76 to the release position. The infant carrier 24 in this example also has a reinforced perimeter lip 80 extending outward around at least portions of the carrier's circumference. An engagement surface 82 is formed on the underside of the lip 80 at each of the front corners 84 at the foot end 58 of the infant carrier. To enhance the structural integrity of the infant carrier's shell, at least portions of the lip 80 can include a skirt 86 that depends from the edge of the lip.

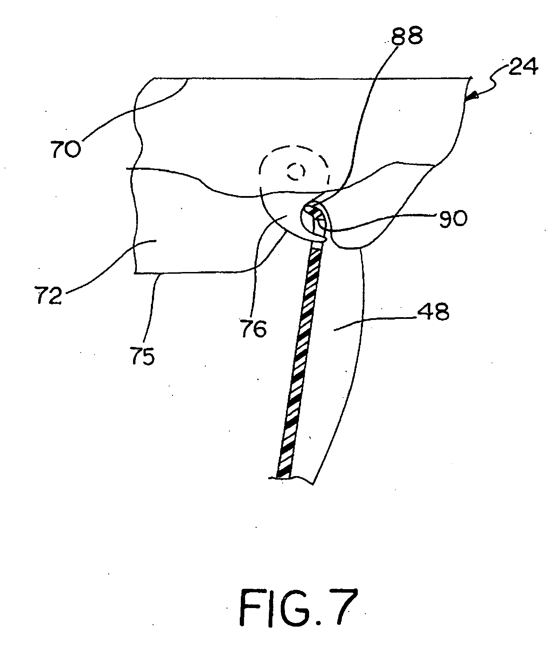

As depicted in FIG. 2, the infant carrier 24 can be installed on the stroller assembly 22 after moving the seat back 50 to the carrier support position depicted in FIG. 4. In this example, and as illustrated in FIG. 7, each of the recesses 74 can be lowered onto the seat back 50 to receive and nest with the top edge 52 of the seat back. In one example, the latch hook 76 can engage a flange 88 that projects rearward from the top edge 52 of the seat back. In the example shown, a latch depression or an opening 90 can also be positioned in the seat back near the top edge 52 and adjacent the flange 88. The latch hook 76 can extend into and engage the depression or opening 90 to assist in securing the infant carrier 24 on the seat back. In an alternate example, are wire catch or other structure can be provided on the seat back 50 to engage and catch the latch hook 76.

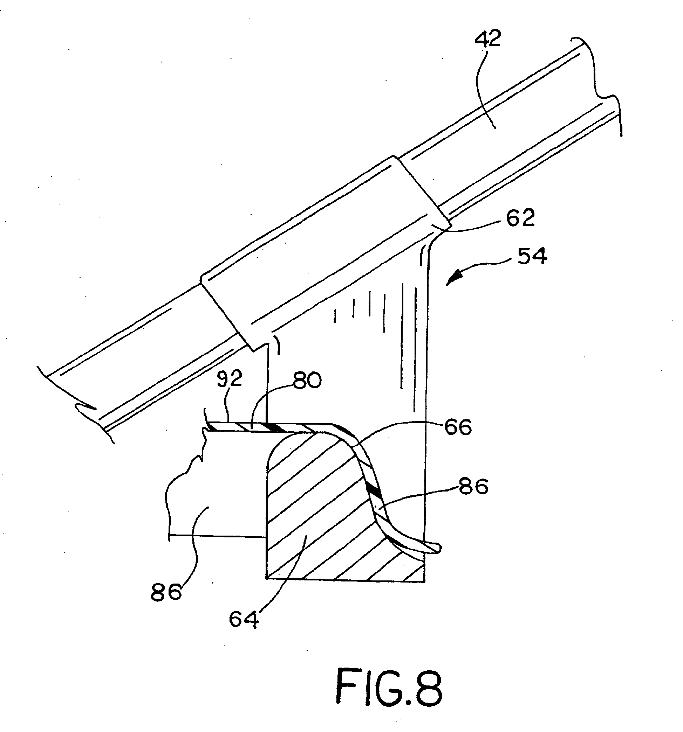

As depicted in FIG. 8, the engagement surface 82 on each of the front corners 84 of the carrier are positioned to rest on the support surfaces 64 of the respective mounting brackets 54. With reference to FIGS. 5 and 8, the skirt 86 on the lip 80 is sized to seat within the blind channel 66 on the mounting brackets 54. The support surface 64 on each of the mounting brackets 54 can thus be configured to correspond in shape with the engagement surface 82 at each carrier front corner 84, which is best illustrated in FIG. 8.

Though not shown herein, a rotatable locking device or other lock can be carried on the push bars 42 adjacent the mounting brackets 54. As is known in the art, the locking devices can be moved from a released position to a locked position where the infant carrier 24 is prevented from being lifted from the stroller assembly. In the disclosed example, the lock could be configured to bear against a top surface 92 on the lip 80 near or at each of the mounting brackets 54 to further secure the infant carrier 24 when mounted to the stroller assembly 22. These locks in the prior art typically create an upward barrier to hold the foot end of the infant carrier. An infant carrier simply rests on the front seating surface of the reclined, i.e., tipped rearward, seat back when the carrier is mounted to the stroller.

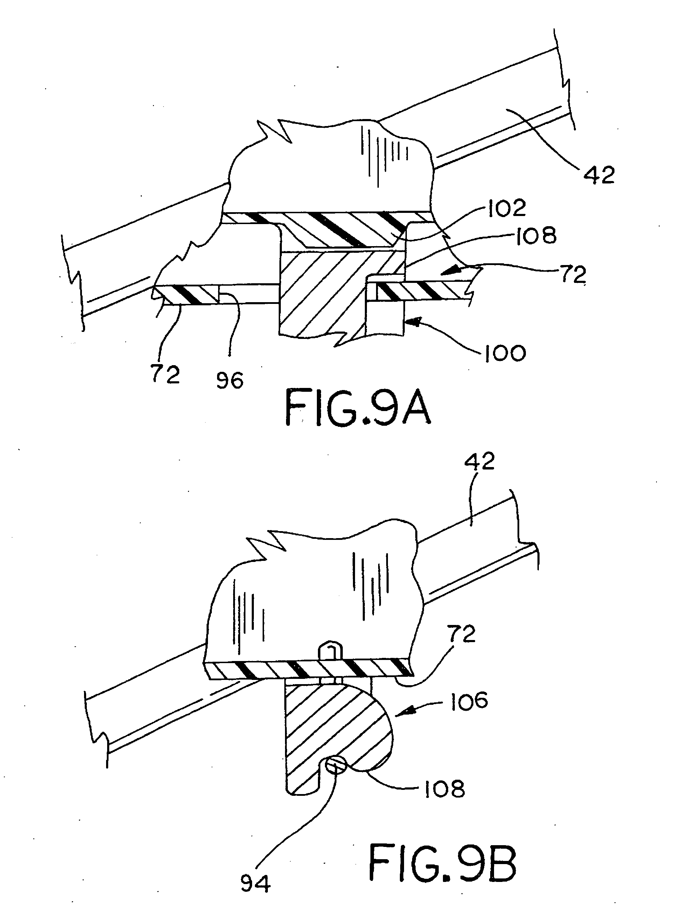

As will become evident to those having ordinary skill in the art upon reading this disclosure, the mounting brackets 54 can vary considerably. FIGS. 9A and 9B depict only two of many possible alternative examples. With reference to FIG. 6, a conventional infant carrier has a number of structural features and elements on the underside 70. As shown, the infant carrier 24 may include a pair of passive retaining loops 94, which can be made of steel and which are typically provided for retaining the carrier to a car seat base. In addition, a pair of holes 96 is formed through the bottom surface 75 of each of the standoffs 72. Referring back to FIG. 9A, an alternate mounting bracket 100 is configured to be received in and engage with one of the holes 96 in the bottom surface 75 on the carrier standoffs 72. In such an example, a guide or positioner 102 can be located within and facing each of the holes 96 to assist in snugly retaining the mounting brackets 100 within the respective holes. Another alternate mounting bracket 106 is shown in FIG. 9B and is configured to engage with one of the loops 94 on the underside 70 of the infant carrier. Each of the mounting brackets 100 and 106 can include a projection 108 or other retainer element to positively engage with the respective feature on the infant carrier, such as a hole 96 or a loop 94. Other alternate mounting bracket configurations are certainly within the scope of the present invention.

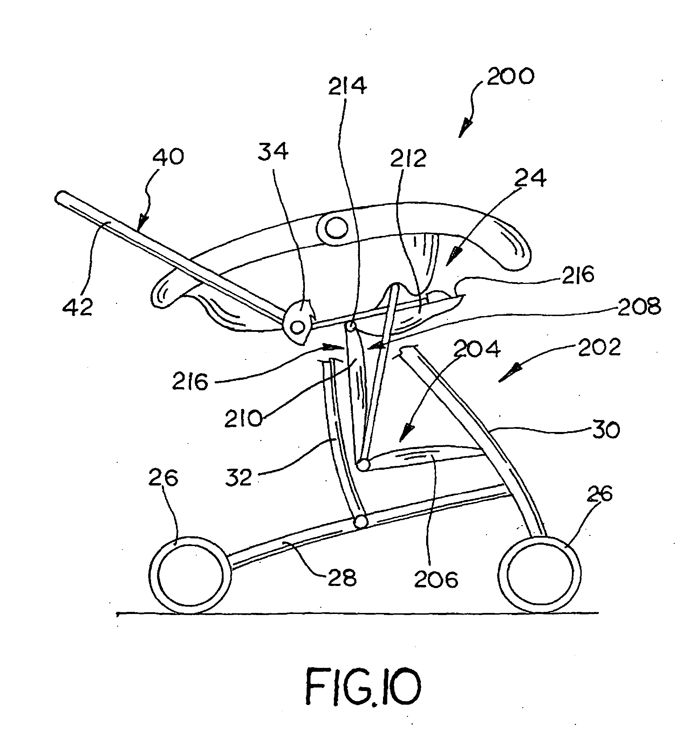

Turning now to FIG. 10, another alternate example of a stroller system 200 is shown and is constructed according to the teachings of the present invention. In this example, the stroller system 200 includes a stroller assembly 202, which is also generically depicted and which is essentially identical, other than the toddler seat, to the stroller assembly 22 described previously. In this example, a toddler seat 204 of the stroller assembly 202 has a seat bottom 206 and a seat back 208. The seat back 208 in this example is divided into two sections that are pivotable relative to one another. The seat back 208 has a lower section 210 that can either be pivotally connected to the seat bottom 206 or the frame assembly or affixed relative thereto. The seat back 208 also has an upper section 212 that is pivotally connected to an upper edge 213 of the lower section 210 at a pivot point 214. The seat back 208 in this example has a forward facing side, which defines part of the seating surface for the toddler seat, and a back side 216. Part of the back side 216 is defined on the lower section 210 and part of the back side is defined on the upper section 212.

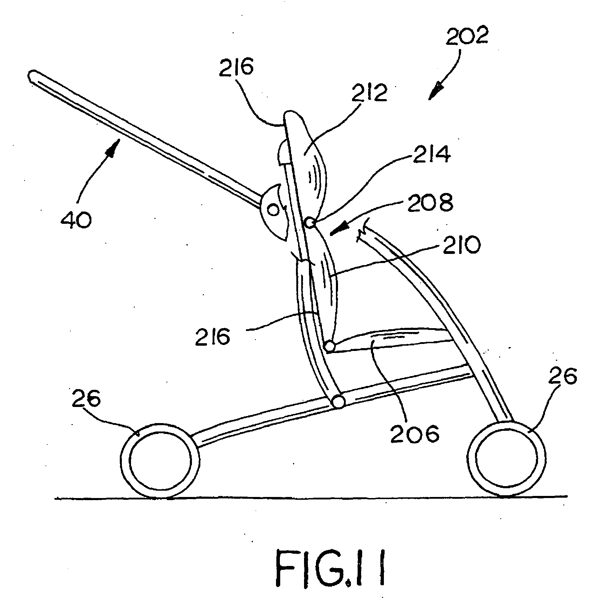

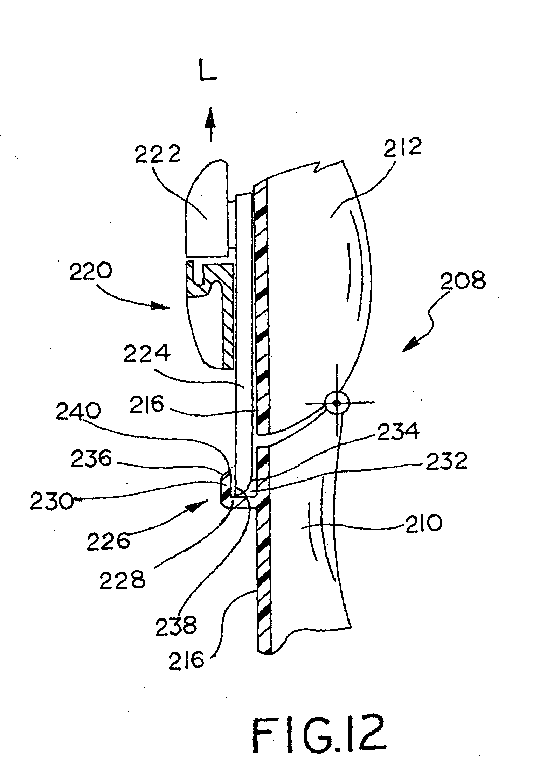

FIG. 11 shows a side view of the stroller assembly 202 with the toddler seat 204 oriented in a normal use configuration. FIG. 12 shows a vertical, partial cross-section through a center of the seat back 208 of the toddler seat 204 in the normal use configuration. The upper section 212 of the seat back 208 is pivoted upward and rearward about the pivot point 214 to the normal use configuration. The upper section 212 and the lower section 210 are generally in line in this configuration so as to define in combination a generally continuous seating surface on the forward facing side of the toddler seat 204 opposite the back side 216.

As will be evident to those having ordinary skill in the art upon reviewing this disclosure, the particular structure of the seat back 208 and its various components can vary from the example shown in described herein. In general, the seat back components are configured to create a suitably sturdy and appropriately shaped seat. The components are also provided to allow the upper section 212 to pivot relative to the lower section 210 as well as to assist in retaining the two sections in the normal use configuration. In one example, a latch assembly 220 is carried on the backside 216 of the upper section 212 on the seat back 208. The latch assembly 220 in this example includes a release actuator or handle 222 that is connected to an elongate latch bar 224 oriented vertically on the back side of the upper section 212. With reference to FIG. 12, the latch assembly 220 can be biased downward to a latched position and can be moved upward against a biasing force in the direction of the arrow L to a release position. The latch assembly 220 can be spring biased or otherwise resiliently biased using any suitable device or mechanism. If desired, the handle movement direction and/or biasing direction can be reversed or otherwise altered as well.

A receiver 226 is carried on the back side 216 of the lower section 210 on the seat back. In this example, the receiver 226 has an outward projecting leg 228 extending from the back side 216 and has an upturned catch leg 230 extending up from the projecting leg 228 and spaced from the back side 216. The projecting leg 228 and the catch leg 230 create a space or way 232 between the catch leg and the back side 216. A width and depth of the receiver, and thus the way 232, are sized to receive the free end of the latch bar 224 with the seat back 208 in the normal use configuration. Though not depicted herein, the receiver can have side walls forming a pocket shaped receptacle, if desired.

Also with reference to FIG. 12, the leading edge 234 on the free lower end of the latch bar 224 is rounded, ramped, or curved. A corresponding leading edge 236 on the upper end of the catch leg 230 of the receiver 226 is also rounded, ramped, or curved. These correspondingly shaped bearing surfaces, i.e., the leading edges 234 and 236, can permit the latch bar 224 to automatically overcome the biasing force, clear the receiver 226, and then pop or snap into the way 232 when the upper section 212 of the seat back 208 is pivoted to the normal use configuration. Likewise, the respective trailing edges 238 and 240 on the latch bar 224 and catch leg 230 can be squared off. With this arrangement, the biasing force and squared off bearing surfaces of the latch assembly 220 will retain the latch part 224 in the receiver 226 during use of the toddler seat in the normal use configuration. A user can release the upper section 212 by manually pulling up on the handle 222 in the direction of the arrow L.

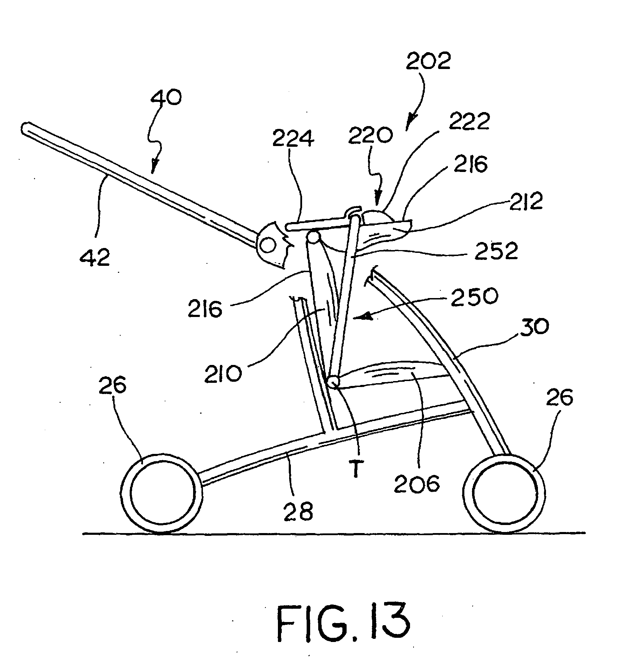

With reference to FIGS. 13-15, the upper section 212 of the seat back 208 can be pivoted about the pivot point 214 forward and downward to a lowered position upon release of the latch assembly 220. Once the upper section 212 is pivoted to the lowered position, infant carrier attachment components, elements, or mechanisms on the back side 216 are exposed and ready. Again, the configuration and construction of these seat back components, elements, and/or mechanisms can vary. These elements and mechanisms can include structure to assist in securing the infant carrier 24 to the seat back 208 as well as to include structure to assist in retaining the upper section 212 in the lowered position. Alternatively, these two functions can be performed by entirely separate and distinct components of the stroller assembly 202 and/or toddler seat 204. A housing 248 can be provided on the back side 216 of the seat back 208 to house some or all of the components and/or to assist in defining one or more of the mechanisms and features as well.

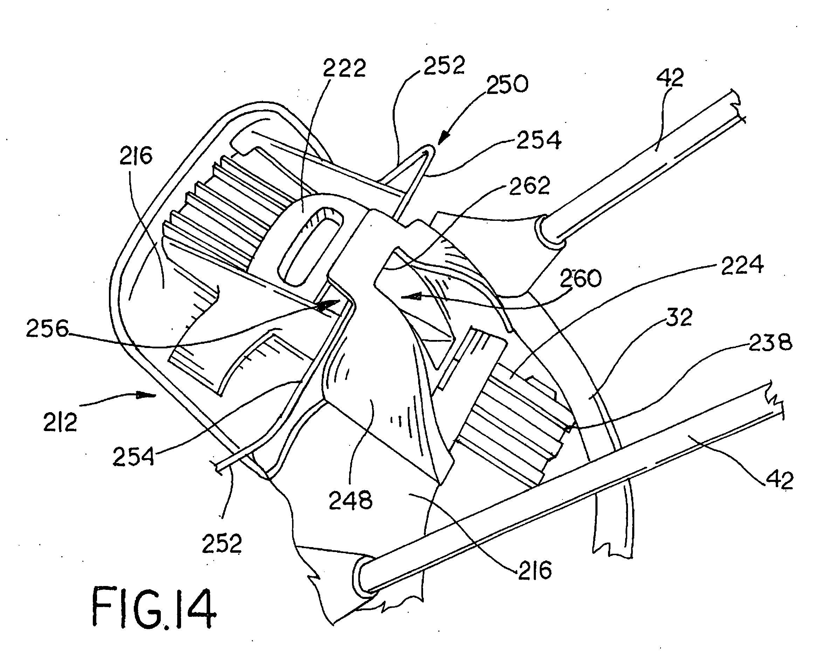

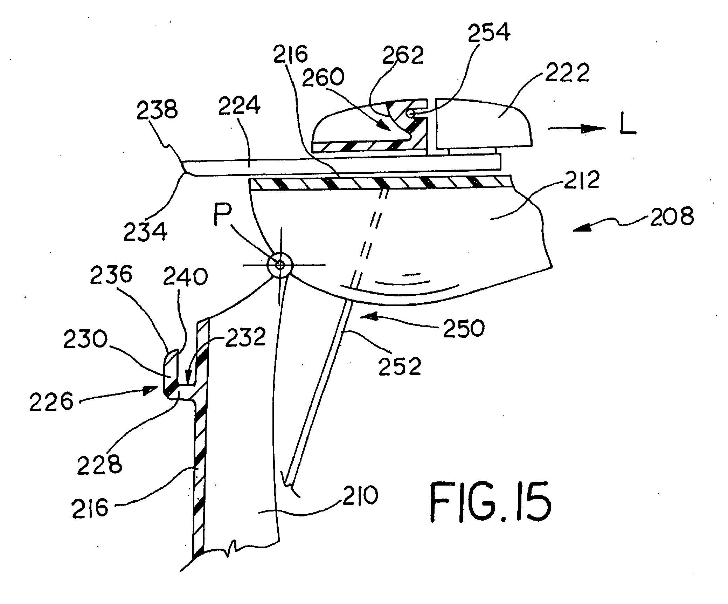

In one example, a pivotable brace 250 can be carried on a portion of the frame assembly. In this example, the brace 250 is depicted as being pivotable about the toddler seat pivot T to a supporting position as shown from a stowed position (see FIG. 11). The brace 250 in this example is U-shaped and has a pair of vertical legs 252 pivotally connected at the pivots T to the seat bottom. The brace 250 also has a transverse brace link 254 extending between the upper ends of the vertical legs 252. With the upper section 212 of the seat back 208 in the lowered position, the brace 250 can be pivoted forward to a bracing position as depicted in FIG. 13. In the disclosed example, a brace channel 256 is positioned on the back side 216 on the upper section 212. The brace channel 256 is closed off by the handle 222 when in the latched position and can be opened by moving the handle to the latch release position. Thus, the brace link 254 can be placed in the channel 256 and then captured therein by the handle 222 as depicted in FIGS. 14 and 15. When in this arrangement, the brace 250 creates a linkage in conjunction with the seat back sections that stabilizes and holds the upper section 212 in the lowered position. A stop limiter can be provided at the pivot T or some other location to hold the seat back 208 and/or the brace 250 in a desired position. Alternatively, the brace 250 can be connected to the frame assembly at an alternate location, other than the pivot T, to create a four bar linkage to support the seat back upper section in the lowered position. A stop limiter can be provided on the brace and/or the seat back to retain the relative position of the brace and upper section.

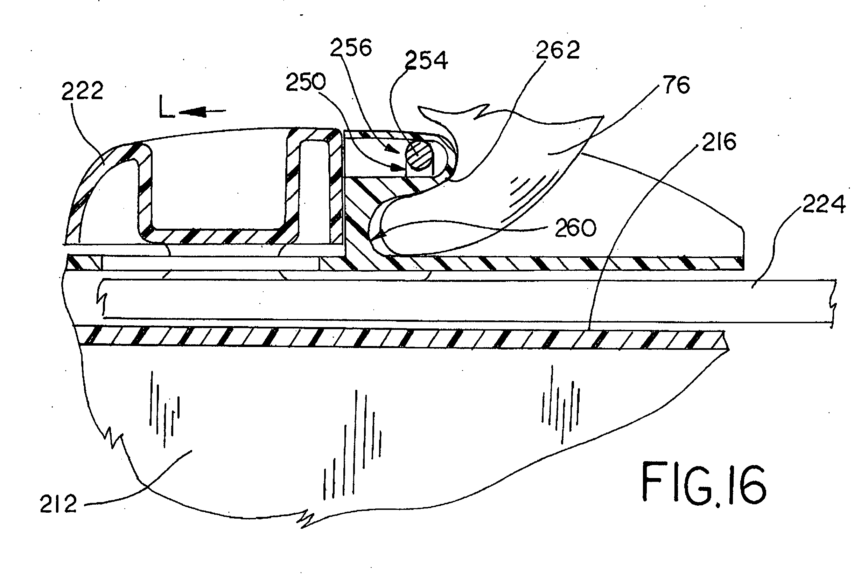

With reference to FIGS. 14 and 16, a hook catch 260 can be formed on the back side 216 of the seat back. In this example, the hook catch 260 is a blind tunnel centered on the back side 216 of the upper section 212 and open in a downward direction. Portions of the brace link 254 are exposed on opposite sides of the hook catch 260. A lip 262 of the hook catch 260 overhangs a portion of the blind tunnel. With reference to FIG. 15, the recesses 74 on the underside of the infant carrier 24 receive therein and nest with the exposed portions of the link 254 on opposite sides of the hook catch 260 when the carrier is attached to the stroller assembly 202. In addition, the latch hook 76 is received in the hook catch 260 under the lip 262 to retain the infant carrier 24 on the stroller assembly 202. The back side 216 of the seat back 208 can be shaped to correspond at least in part to the shape of the underside 72 of the infant carrier. This can assist in stabilizing the infant carrier 24 when installed. In addition, the exposed portions of the brace link 254, or some other part on the seat back 204 can be sized and shaped to closely correspond with the shape of the recesses.

Again, as will become evident to those having ordinary skill in the art upon reading this disclosure, the configuration and construction of the carrier attachment components, elements, and/or mechanisms on the back side 216 of the seat back 208 can vary from the example shown herein. As disclosed and described herein, the head or rear end 56 of the infant carrier 24 attaches to the upper section 212 of the seat back 208. The foot or forward end 58 of the infant carrier 24 can attached to other portions of the stroller assembly 202. In one example, the foot end 58 can mount to brackets, such as the mounting brackets 54, 100, or 106 previously described, on the push bars of the stroller assembly 202.

FIG. 17 illustrates a prior art stroller system 300 including a stroller assembly 302 and an infant carrier 24 being attached thereto. The typical stroller assembly 302 includes a child tray 304 positioned forward of the toddler seat 306. The tray 304 is configured to engage with and retain the head or rear end 56 of the infant carrier 24. The seat back 308 is typically reclined rearward to a lowermost position on such a prior art stroller assembly 302. The foot end 58 of the infant carrier 24 thus rests on the seating surface of the seat back 308. With reference to FIG. 18, a prior art stroller system 300 is generically illustrated from the side. The positioning of the infant carrier 24 is low and quite far forward relative to the handle, and thus the caregiver.

This positioning makes it difficult for a caregiver to reach an infant seated in the carrier. As a result of this distance, it can also be quite difficult for the child in the carrier 24 to recognize the caregiver. A young infant typically can not see clearly beyond about 30,48-45,72 cm (12 to 18 inches), as previously noted. This lack of recognition can be disconcerting to a young infant. It is well known that direct eye contact between an infant and caregiver can be calming, comforting, and soothing to the infant. Direct eye contact between caregiver and infant at distances significantly greater than 45,72 cm (18 inches) would not be very beneficial or helpful. Also as noted above, direct physical contact between caregiver and infant can often prove very beneficial or even necessary for the wellbeing of the infant. While pushing the stroller, the caregiver may simply wish to reach out and touch the infant to calm or comfort the child. The caregiver may need to reposition the sleeping infant in the seat or replace a sock or hat. Any number of circumstances may frequently arise during stroller usage where the caregiver wishes or needs to quickly reach or touch the infant. Prior art stroller systems can significantly inhibit such contact.

In each of the disclosed examples herein, the infant carrier 24 is both elevated to a position higher than the traditional stroller system depicted in FIGS. 17 and 18 and placed further rearward to a position closer to the caregiver operating the stroller. The disclosed stroller systems 20 and 200 can thus significantly enhance the parent and child connection experience during use of a stroller system with an infant carrier mounted to the stroller.

The configuration of the toddler seat can vary as noted above. In another example, it is possible that the toddler seat pivots as an entire unit about a forward edge of the seat bottom from a normal use position to a carrier support position. It is also possible that the seat back have two sections wherein the upper section pivots downward, but rearward and yet can support part of the infant carrier. In such an example, the lower section may be pivotable relative to both the upper section and the seat bottom in order to assist in positioning the seat back to support the carrier. It is also possible that the infant carrier be supported on the top edge of the lower section of the seat back after pivoting the upper section out of the way.

Although certain strollers and stroller seat arrangements have been described herein in accordance with the teachings of the present disclosure, the scope of coverage of this patent is not limited thereto. On the contrary, this patent covers all embodiments of the teachings of the disclosure that fairly fall within the scope of the claims.

## Claims

1. A stroller system comprising:
a stroller (202) having a front, a back, a frame assembly, and a toddler seat (204) mounted to the frame assembly, the toddler seat (204) having a seat bottom (206) and a seat back (208) extending up relative to the seat bottom (206), **characterized by** the seat back having an upper section (212) that is selectively pivotable relative to a lower section (210) of the seat back (208) downward to a lowered position; and
an infant carrier (24) removably mountable to the stroller (202) and connectable in part to the upper section (212) of the seat back when in the lowered position.

2. A stroller system according to claim 1, wherein the upper section (212) of the seat back is pivotable downward and forward toward the front end of the frame assembly, and the infant carrier (24) is connectable in part to a back side (216) of the upper section (212).

3. A stroller system according to claim 1, further comprising a brace (250) coupled to the stroller and movable to a supporting position in contact with the upper section (212) of the seat back in the lowered position.

4. A stroller system according to claim 3, wherein the infant carrier (24) includes an upward recess (74) in an underside (72) of the infant carrier, and wherein a part of the brace (250) nests within the recess.

5. A stroller system according to claim 1, wherein the infant carrier (24) includes a latch hook (76) positioned on an underside (72) of the infant carrier (24), and wherein the latch hook engages a hook catch (260) on the back side (216) of the seat back.

6. A stroller system according to claim 1, further comprising a latch assembly (220) on the back side (216) of the seat back (208), wherein the latch assembly (220) in a latched position is configured to retain the upper section (212) and the lower section (210) of the seat back in a normal use position relative to one another.

7. A stroller system according to claim 6, wherein the latch assembly (220) assists in retaining the upper section (212) of the seat back in the lowered position.

8. A stroller system according to claim 1, wherein the frame assembly includes a pair of push arms (42) of a handle assembly (40) and a part of the infant carrier (24) is supported on a mounting bracket (54) coupled to each of the push arms.

9. A stroller according to claim 1, further comprising a mounting bracket (54) on the frame assembly wherein the infant carrier (24) is supported in part on the mounting bracket.

10. A stroller system according to claim 6, in which the latch assembly (220) includes a release actuator (222) that is connected to an elongate latch bar (224) orientated vertically on the backside of the upper section, the latch assembly (220) arranged to be moved between a latch position and a release position.

11. A stroller according to claim 10, in which the latch assembly is biased downward to the latched position and can be moved upward against a biasing force to the release position.

12. A stroller system according to claim 10 or claim 11, in which the system is arranged to release the upper section (212) by pulling up on the release actuator (222).

## Patentansprüche

1. Kinderwagensystem, das aufweist:
einen Kinderwagen (202) mit einer Vorderseite, einer Rückseite, einer Rahmenbaugruppe und einem Kindersitz (204), der an der Rahmenbaugruppe angebracht ist, wobei der Kindersitz (204) eine Sitzflächenseite (206) und eine Sitzrückenlehne (208), die sich im Bezug zur Sitzflächenseite erstreckt, aufweist,
**dadurch gekennzeichnet, dass**
die Sitzrückenlehne einen oberen Bereich (212) aufweist, der wahlweise relativ zu einem unteren Bereich (210) der Sitzrückenlehne (208) nach unten in eine abgesenkte Position schwenkbar ist; und
eine Kleinkindertragevorrichtung (24), die abnehmbar am Kinderwagen (202) angebracht ist und die teilweise mit dem oberen Bereich (212) der Sitzrückenlehne verbindbar ist, wenn diese abgesenkt ist.

2. Kinderwagensystem gemäß Anspruch 1, wobei der obere Bereich (212) der Sitzrückenlehne nach unten und vorne in Richtung der Vorderseite der Rahmenbaugruppe schwenkbar ist, und die Kleinkindertragevorrichtung (24) teilweise mit der Rückseite (216) des oberen Bereichs (212) verbindbar ist.

3. Kinderwagensystem gemäß Anspruch 1, das weiterhin eine Verstrebung (250) aufweist, die mit dem Kinderwagen verbunden ist und die in Kontakt mit dem oberen Bereich (212) der abgesenkten Sitzrückenlehne in eine Stützposition bewegbar ist.

4. Kinderwagensystem gemäß Anspruch 3, wobei die Kleinkindertragevorrichtung (24) eine nach oben verlaufende Aussparung (74) in einer Unterseite (72) der Kleinkindertragevorrichtung aufweist, und wobei ein Teil der Verstrebung (250) in der Aussparung aufliegt.

5. Kinderwagensystem gemäß Anspruch 1, wobei die Kleinkindertragevorrichtung (24) einen Verriegelungshaken (76) enthält, der an einer Unterseite (72) der Kleinkindertragevorrichtung (24) angeordnet ist, und wobei der Verriegelungshaken in eine Hakenarretierung (260) an der Rückseite (216) der Sitzrückenlehne eingreift.

6. Kinderwagensystem gemäß Anspruch 1, weiterhin aufweisend eine Verriegelungsvorrichtung (220) auf der Rückseite (216) der Sitzrückenlehne (208), wobei die Verriegelungsvorrichtung (220) in einer verriegelten Position gestaltet ist, um den oberen Bereich (212) und den unteren Bereich (210) der Sitzrückenlehne in Beziehung zueinander in einer normalen Gebrauchsposition zu halten.

7. Kinderwagensystem gemäß Anspruch 6, wobei die Verriegelungsvorrichtung (220) mitwirkt, den oberen Bereich (212) der Sitzrückenlehne in der abgesenkten Position zu halten.

8. Kinderwagensystem gemäß Anspruch 1, wobei die Rahmenbraugruppe ein Paar Schiebearme (42) einer Griffbaugruppe (40) enthält und ein Teil des Kinderwagens (24) von einem Befestigungsbügel (54), der mit einem jeden der Schiebearme verbunden ist, getragen wird.

9. Kinderwagen gemäß Anspruch 1, der weiterhin einen Befestigungsbügel (54) auf der Rahmenbaugruppe aufweist, wobei die Kleinkindertragevorrichtung (24) teilweise von dem Befestigungsbügel getragen wird.

10. Kinderwagensystem gemäß Anspruch 6, wobei die Verriegelungsbaugruppe (220) einen Freigabe-Betätigungsmechanismus (222) enthält, der mit einem länglichen Verriegelungsstab (224) verbunden ist, der vertikal auf der Rückseite des oberen Bereichs ausgerichtet ist, wobei die Verriegelungsbaugruppe (220) angeordnet ist, um zwischen einer Verriegelungsposition und einer Freigabeposition bewegt zu werden.

11. Kinderwagen gemäß Anspruch 10, wobei die Verriegelungsbaugruppe nach unten in der verriegelten Position vorgespannt ist und in die Freigabeposition gegen die Vorspannkraft nach oben bewegt werden kann.

12. Kinderwagensystem gemäß Anspruch 10 oder 11, wobei das System angeordnet ist, um den oberen Bereich (212) durch Ziehen des Freigabe-Betätigungsmechanismus (222) nach oben freizugeben.

## Revendications

1. Système de poussette comprenant :
une poussette (202) comportant un avant, un arrière, un assemblage formant cadre et un siège pour tout-petit (204) monté sur l'assemblage formant cadre, le siège pour tout-petit (204) possédant un fond de siège (206) et un dos de siège (208) s'étendant vers le haut par rapport au fond du siège (206), **caractérisé en ce que** le dos du siège présente une section supérieure (212) qui peut pivoter sélectivement par rapport à la section inférieure (210) du dos du siège (208) vers le bas jusqu'à une position abaissée, et
un porte-bébé (24) pouvant être monté tout en étant démontable sur la poussette (202) et pouvant être relié en partie à la section supérieure (212) de l'arrière du siège lorsqu'il se trouve en position abaissée.

2. Système de poussette selon la revendication 1, dans lequel la section supérieure (212) de l'arrière du siège peut pivoter vers le bas et en avant, vers l'extrémité avant de l'assemblage formant cadre, et le porte-bébé (24) peut être relié en partie sur le côté arrière (216) de la section supérieure (212).

3. Système de poussette selon la revendication 1, comprenant en outre un appui (250) accouplé à la poussette et pouvant se déplacer vers une position de support en contact avec la section supérieure (212) de l'arrière du siège dans la position abaissée.

4. Système de poussette selon la revendication 3, dans lequel le porte-bébé (24) inclut un renfoncement vers le haut (74) dans le côté inférieur (72) du porte-bébé et dans lequel une partie de l'appui (250) repose à l'intérieur du renfoncement.

5. Système de poussette selon la revendication 1, dans lequel le porte-bébé (24) inclut un crochet de verrouillage (76) positionné sur le côté inférieur (72) du porte-bébé (24), et dans lequel le crochet de verrouillage se met en prise avec un cliquet de verrouillage (260) sur le côté arrière (216) de l'arrière du siège.

6. Système de poussette selon la revendication 1, comprenant en outre un ensemble formant verrouillage (220) sur le côté arrière (216) de l'arrière du siège (208), dans lequel l'ensemble formant verrouillage (220), en position verrouillée, est configuré pour retenir l'une par rapport à l'autre la section supérieure (212) et la section inférieure (210) de l'arrière du siège dans une position d'utilisation normale.

7. Système de poussette selon la revendication 6, dans lequel l'ensemble formant verrouillage (220) fournit une assistance de fixation de la section supérieure (212) de l'arrière du siège dans la position abaissée.

8. Système de poussette selon la revendication 1, dans lequel l'assemblage formant cadre inclut une paire de bras de poussée (42) d'un ensemble formant poignée (40), et une partie du porte-bébé (24) est supportée sur un support de montage (54) accouplé à chacun des bords de poussée.

9. Système de poussette selon la revendication 1, comprenant en outre un support de montage (54) sur l'assemblage formant cadre dans lequel le porte-bébé (24) est maintenu en partie sur le support de montage.

10. Système de poussette selon la revendication 6, dans lequel l'ensemble formant verrouillage (220) inclut un actionneur de libération (222) qui est relié à une barre allongée de verrouillage (224) orientée verticalement sur le côté arrière de la section supérieure, l'ensemble formant verrouillage (220) étant agencé pour être déplacé entre une position de verrouillage et une position de libération.

11. Système de poussette selon la revendication 10, dans lequel l'ensemble formant verrouillage est sollicité vers le bas jusqu'à la position verrouillée et peut être déplacé vers le haut à l'encontre d'une force de sollicitation jusqu'à la position de libération.

12. Système de poussette selon la revendication 10 ou la revendication 11, dans lequel le système est agencé pour libérer la section supérieure (212) en faisant remonter l'actionneur de libération (222).
